(19) Europäisches Patentamt / European Patent Office / Office européen des brevets

(11) **EP 2 392 952 B1**

(12) **FASCICULE DE BREVET EUROPEEN**

(45) Date de publication et mention
de la délivrance du brevet:
**12.12.2012 Bulletin 2012/50**

(51) Int Cl.:
**G02B 6/00** *(2006.01)*    **F21V 8/00** *(2006.01)*

(21) Numéro de dépôt: **10164825.1**

(22) Date de dépôt: **03.06.2010**

(54) **Système d'éclairage d'un dispositif d'affichage d'informations comprenant un guide de lumière**

Beleuchtungssystem eines Informationsanzeigesystems, das einen Lichtwellenleiter umfasst

Lighting system for an information display device including a light guide

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(43) Date de publication de la demande:
**07.12.2011 Bulletin 2011/49**

(73) Titulaire: **The Swatch Group Research and
Development Ltd.
2074 Marin (CH)**

(72) Inventeur: **Tortora, Pierpasquale
2000 Neuchâtel (CH)**

(74) Mandataire: **Surmely, Gérard
ICB
Ingénieurs Conseils en Brevets SA
Faubourg de l'Hôpital 3
2001 Neuchâtel (CH)**

(56) Documents cités:
**WO-A1-2009/134573      GB-A- 2 324 599
US-A1- 2009 167 651      US-B1- 6 874 924**

**Description**

La présente invention concerne un système d'éclairage d'un dispositif d'affichage d'informations comprenant un guide de lumière. Plus précisément, la présente invention concerne un dispositif d'extraction de lumière avec système de récupération de la lumière non utilisée pour l'éclairage d'un dispositif d'affichage d'informations.

Un tel système est connu de GB2324599 pour procurer une illumination annulaire.

Dans ce qui suit, on s'intéresse en particulier à l'éclairage par l'avant d'un dispositif d'affichage tel qu'une cellule à cristal liquide de type réflectif. Cette technique est mieux connue sous sa dénomination anglo-saxonne d'illumination «front light».

Une technique connue pour assurer l'éclairage par l'avant d'un dispositif d'affichage de type réflectif consiste à disposer au-dessus du dispositif d'affichage un guide de lumière transparent à l'intérieur duquel est injectée de la lumière. Le guide de lumière est structuré de manière à permettre progressivement l'extraction de la lumière qui s'y propage en direction du dispositif d'affichage sous-jacent. Les structures prévues dans le guide de lumière pour permettre l'extraction de la lumière sont appelées «extracteurs de lumière». Le nombre, la géométrie et la distribution de ces extracteurs à l'intérieur du guide de lumière varient en fonction des applications.

La sélection d'un type donné d'extracteur de lumière qui soit apte à fournir un bon niveau d'illumination sans toutefois dégrader le contraste d'affichage des informations fournies par le dispositif d'affichage est une tâche ardue. En effet, pour des raisons notamment esthétiques que l'on comprendra aisément, de tels extracteurs de lumière doivent en particulier être aussi peu visibles que possible au regard de l'utilisateur et pouvoir assurer un éclairage du dispositif d'affichage qui soit aussi uniforme que possible sur toute la surface du dispositif d'affichage. Cette dernière condition est tout particulièrement importante dans le cas de l'éclairage d'un dispositif d'affichage intégré dans une montre-bracelet.

Le premier problème qui se pose dans le cas de l'éclairage par l'avant ou illumination front-light d'un dispositif d'affichage réflectif au moyen d'un guide de lumière et qui pénalise l'uniformité de l'éclairage est lié au principe même de fonctionnement d'un tel guide de lumière.

En effet, en appelant $P_0$ la puissance optique injectée par une source lumineuse à l'entrée du guide de lumière et en supposant que ce guide possède une efficacité E d'extraction de la lumière par unité de longueur, la puissance optique interne subsistant à l'intérieur du guide de lumière en fonction de la distance z parcourue par la lumière dans le guide est donnée par la formule $P_0 e^{-E.Z}$. Par suite, la puissance optique $P_{extr}(z)$ que l'on peut extraire du guide en un point z donné de la longueur du guide est proportionnelle à la puissance optique interne selon la relation :

$$P_{extr}(z) \propto P_0 e^{-E \cdot z} \qquad (1)$$

L'équation (1) ci-dessus montre que si l'efficacité d'extraction E de la lumière reste la même tout le long du guide de lumière, la puissance optique $P_{extr}(z)$ extraite du guide décroît exponentiellement avec la distance au point d'injection de la lumière dans le guide. Par conséquent, l'éclairage du dispositif d'affichage ne sera pas uniforme sur toute la surface de celui-ci.

Pour remédier à ce problème, une première solution consisterait à créer un guide de lumière présentant une efficacité d'extraction de la lumière variable avec la distance au point d'injection de la lumière dans le guide. Plus précisément, l'efficacité d'extraction de la lumière du guide devrait croître au fur et à mesure que l'on s'éloigne du point d'injection de la lumière dans le guide. Une telle solution est cependant difficile à mettre en oeuvre. En effet, l'efficacité d'extraction de la lumière reste, par définition, toujours inférieure à 1. Par conséquent, l'efficacité d'extraction ne peut croître indéfiniment en fonction de l'éloignement au point d'injection de la lumière dans le guide. En outre, pour obtenir une variation continue de l'efficacité d'extraction de la lumière le long du guide, il faudrait modifier continûment la géométrie ou la profondeur des extracteurs de lumière dans le guide, ce qui requerrait des efforts considérables en termes de conception et de fabrication du guide de lumière.

Une autre solution pour compenser la décroissance exponentielle de la puissance optique extraite du guide de lumière consisterait à procurer un guide présentant une efficacité d'extraction optique constante tout le long du guide et très faible, c'est-à-dire très inférieure à 1. Dans ce cas, l'équation (1) indiquée ci-dessus pourrait s'approximer comme suit :

$$P_{extr}(z) \propto P_0 e^{-E \cdot z} \approx P_0(1 - E \cdot z) \approx P_0 \qquad (2)$$

L'équation (2) ci-dessus montre qu'avec une efficacité d'extraction optique constante et très faible, la puissance optique extraite du guide de lumière est sensiblement la même tout le long du guide et égale à la puissance optique injectée dans le guide à l'entrée de celui-ci. En pratique, cette solution est plus facile à réaliser car elle ne nécessite pas de devoir faire varier la géométrie des extracteurs le long du guide. En effet, l'efficacité d'extraction de la lumière doit être la même tout le long du guide optique. Toutefois, cette seconde solution pose également un problème. Effectivement, pour être vérifiée, l'équation (2) ci-dessus implique que l'efficacité d'extraction de la lumière soit très faible. Autrement dit, seule une faible partie de la puissance lumineuse initialement injectée dans le guide de lumière est réellement utilisée pour éclairer le dispositif d'affichage réflectif. Quant au reste de la puissance lumineuse injectée dans le guide de lumière, il sera expulsé ou absorbé une fois parvenu au niveau de la sortie du guide et donc définitivement perdu. Par conséquent, le rendement optique d'un tel système est médiocre.

Pour remédier à ce problème, on pourrait envisager de disposer un miroir à la sortie du guide de lumière de façon à réinjecter dans le guide la lumière qui s'échappe de celui-ci. Une telle solution n'est cependant pas très appropriée au genre de guide de lumière dont il est question ici. En effet, une fois réfléchie à l'intérieur du guide, la lumière se propage dans le guide selon une direction opposée à sa direction de propagation initiale et son interaction avec les extracteurs n'est plus la même car ces derniers présentent généralement une structure asymétrique qui est optimisée pour extraire la lumière provenant directement de la source disposée à l'entrée du guide. La lumière se propageant en sens opposé serait donc extraite ou diffusée de manière non optimisée et dégraderait le contraste d'affichage du dispositif d'affichage.

La présente invention a pour but de pallier les inconvénients susmentionnés ainsi que d'autres encore en procurant un guide de lumière présentant notamment un rendement optique amélioré.

A cet effet, la présente invention concerne un système d'éclairage d'un dispositif d'affichage d'informations selon la revendication 1 annexée à la présente demande de brevet.

Le système d'éclairage d'un dispositif d'affichage d'informations comprend un guide de lumière dans lequel la lumière qui n'est pas extraite au niveau de la zone d'extraction pour l'éclairage du dispositif d'affichage d'informations poursuit son chemin à l'intérieur du guide de lumière et revient à son point de départ au niveau de la zone d'injection de la lumière. Ainsi, la lumière inutilisée au niveau de la zone d'extraction est recyclée et réinjectée dans le guide de lumière dans le même sens de propagation que la lumière initialement injectée et interagit donc de manière optimale avec les extracteurs de lumière, grâce à quoi le couplage de la lumière dans le guide est amélioré et la plus grande partie de la lumière récupérée au niveau de la zone d'extraction est réutilisée. L'éclairage du dispositif d'affichage d'informations est donc homogène sur toute la surface de celui-ci et beaucoup plus lumineux qu'avec les solutions de l'art antérieur.

Un autre avantage de l'invention réside dans le fait que dans le cas où le dispositif d'affichage d'informations est de type réflectif, ce dispositif d'affichage d'informations est éclairé par le dessus, c'est-à-dire du côté où sont affichées les informations, tandis que la source de lumière est disposée sous le dispositif d'affichage. On obtient ainsi un système d'éclairage très compact dans lequel le dispositif d'affichage d'informations est enveloppé dans le guide de lumière. Par ailleurs, la source lumineuse étant disposée sous le dispositif d'éclairage, le halo produit par la source lumineuse, phénomène encore connu sous sa dénomination "hot spot" en terminologie anglo-saxonne, n'est pas perceptible par l'utilisateur.

Inversement, dans le cas où le dispositif d'affichage d'informations est de type transmissif, ce dispositif d'affichage, enveloppé dans le guide de lumière, sera éclairé par le dessous. Dans ce cas aussi, le système d'éclairage résultant est très compact. On observe par ailleurs le grand degré de polyvalence du système d'éclairage selon l'invention qui, moyennant quelques modifications mineures, est capable d'éclairer de manière homogène et intense aussi bien un dispositif d'affichage réflectif qu'un dispositif d'affichage transmissif.

D'autres caractéristiques et avantages de la présente invention ressortiront plus clairement à la lecture de la description détaillée qui suit d'un mode de réalisation du système d'éclairage selon l'invention, cet exemple étant donné à titre purement illustratif et non limitatif seulement en liaison avec le dessin annexé sur lequel :

- la figure 1 est une vue en perspective d'un guide de lumière conforme à la présente invention ;

- la figure 2 est une vue en coupe du système d'éclairage complet selon l'invention avec introduction d'un dispositif d'affichage d'informations de type réflectif à l'intérieur de la boucle formée par le guide de lumière, et

- la figure 3 est une vue analogue à celle de la figure 2, le dispositif d'affichage d'informations étant de type transmissif.

Le guide de lumière décrit dans la présente demande de brevet présente une forme en boucle et permet de la sorte de ramener au niveau de la zone d'injection lumineuse du guide de lumière la lumière qui n'a pas été extraite du guide au niveau d'une zone d'extraction. A cet effet, le guide de lumière comprend une zone d'injection de la lumière prolongée par une zone d'extraction de la lumière qui se referme sur la zone d'injection. Ainsi, la lumière non-utilisée au niveau de la zone d'extraction du guide est réinjectée dans la zone d'injection elle-même prolongée par une zone de transmission qui ramène la lumière non-utilisée au niveau de la zone d'extraction. La lumière réinjectée dans le guide de lumière se propage donc dans la même direction que la lumière injectée initialement, de sorte que l'efficacité des extracteurs dans la zone d'extraction vis-à-vis de la lumière réinjectée est identique à l'efficacité de ces mêmes extracteurs vis-à-vis de la lumière initialement injectée par la source lumineuse. L'illumination du dispositif d'affichage d'informations est homogène sur toute la surface de celui-ci et est plus intense. Grâce à ces caractéristiques, le dispositif d'affichage d'informations, enveloppé dans le guide de lumière, peut, moyennant quelques modifications mineures, être indifféremment éclairé par le dessus s'il est de type réflectif ou par le dessous s'il est de type transmissif. En outre, l'invention procure un système d'éclairage très compact.

La présente invention va être décrite en liaison avec un dispositif d'affichage d'informations de type réflectif, c'est-à-dire nécessitant une illumination par le dessus encore appelée «front lighting» en terminologie anglo-saxonne. Plus précisément, la présente invention va être décrite en liaison avec un dispositif d'affichage à cristal liquide de type réflectif. Il va néanmoins de soi que la présente invention s'applique de manière similaire à un dispositif d'affichage d'informations de type transmissif.

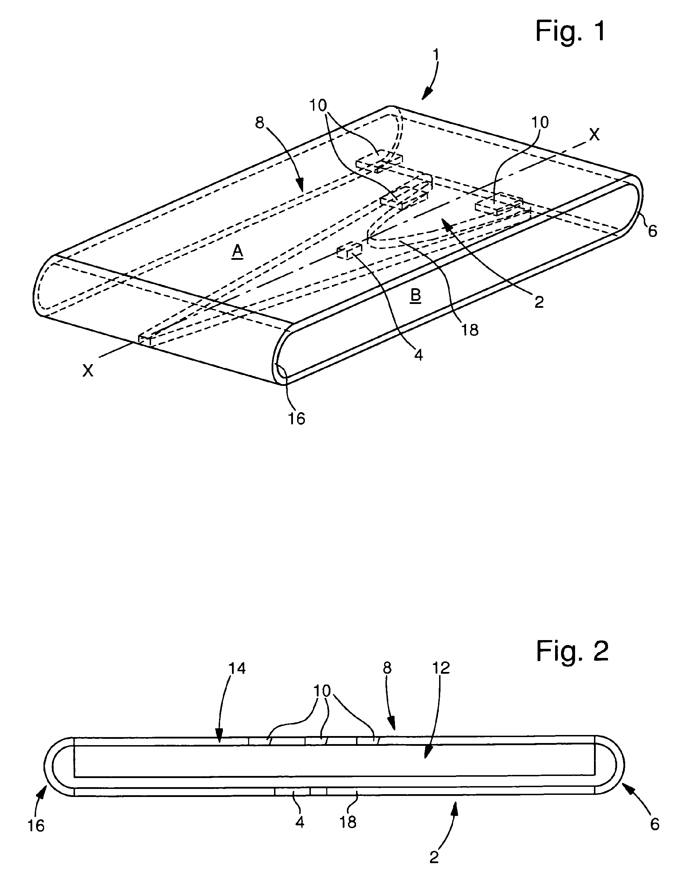

Le guide de lumière selon l'invention est représenté en perspective à la figure 1. Désigné dans son ensemble par la référence numérique générale 1, ce guide de lumière se présente généralement sous la forme d'une boucle fermée sur elle-même. Il comprend une zone 2 d'injection de la lumière en regard de laquelle est disposée une source lumineuse 4. Tout type de source lumineuse tel qu'une ampoule à filament ou une diode électroluminescente peut être utilisé dans le cadre de la présente invention. La lumière est injectée dans le guide de lumière 1 selon l'invention selon une direction sensiblement rectiligne X-X.

La zone 2 d'injection de la lumière est prolongée, via une première zone de transmission semi-cylindrique 6, par une zone 8 d'extraction de la lumière. Cette zone 8 d'extraction de la lumière est pourvue d'une pluralité d'extracteurs optiques 10 destinés à extraire la lumière du guide de lumière 1 et à la diriger vers la surface d'un dispositif d'affichage d'informations 12 de type réflectif tel qu'une cellule à cristal liquide. Comme on peut le voir sur la figure 2, le dispositif d'affichage réflectif 12 est glissé et enveloppé à l'intérieur de la boucle formée par le guide de lumière 1. Bien entendu, la face 14 d'affichage des informations du dispositif d'affichage 12 est tournée du côté de la zone 8 d'extraction de la lumière du guide de lumière 1.

La zone 8 d'extraction de la lumière est elle-même prolongée par une seconde zone de transmission semi-cylindrique 16 qui se raccorde à la zone 2 d'injection de la lumière. Ainsi, la lumière provenant de la source lumineuse 4 et qui n'est pas extraite du guide de lumière 1 au niveau de la zone d'extraction 8 pour l'éclairage du dispositif d'affichage d'informations 12 poursuit son chemin à l'intérieur du guide de lumière 1 et revient à son point de départ au niveau de la zone 2 d'injection de la lumière. On comprendra que la lumière qui n'est pas utilisée au niveau de la zone d'extraction 8 est réinjectée dans le guide de lumière 1 dans le même sens de propagation que la lumière initialement injectée par la source lumineuse 4 et interagit donc de manière optimale avec les extracteurs de lumière 10, grâce à quoi le couplage de la lumière dans le guide 1 est amélioré et la plus grande partie de la lumière récupérée au niveau de la zone d'extraction 8 est réutilisée. L'éclairage du dispositif d'affichage d'informations 12 est donc homogène sur toute la surface de celui-ci et beaucoup plus lumineux qu'avec les solutions de l'art antérieur.

On remarquera que la zone de transmission semi-cylindrique 16 se raccorde à la zone 2 d'injection de la lumière via deux sections de raccordement A et B de forme sensiblement triangulaire. Une telle forme triangulaire permet d'occuper un maximum de surface entre la zone de transmission semi-cylindrique 16 et la zone 2 d'injection de la lumière sans modification du profil parabolique de la zone d'injection 2. La forme triangulaire des deux sections de raccordement A et B permet également de conserver une certaine collimation de la lumière afin que la lumière recyclée revienne dans la zone 8 d'extraction de la lumière suivant des directions de propagation majoritairement parallèles à l'axe de symétrie longitudinale du guide 1.

Le comportement optique du guide de lumière 1 selon l'invention a été étudié au moyen d'outils de modélisation et de simulation optiques. On a supposé que le guide de lumière 1 était par exemple réalisé en verre et présentait une épaisseur constante de 0,4 mm sur toute sa longueur. Bien entendu, le guide de lumière 1 peut être réalisé en un autre matériau diélectrique transparent tel qu'un matériau plastique ou bien du polyméthyl méthacrylate mieux connu sous son acronyme PMMA. Le rayon de courbure des première et seconde zones de transmission semi-cylindriques 6 et 16 a été choisi égal à 0,95 mm. La source de lumière 4 simulée correspond à une diode électroluminescente présentant un lobe d'émission lumineuse semblable à celui des diodes électroluminescentes notamment commercialisées par la société Kingbright. On notera que les extracteurs optiques 10 n'ont pas été pris en compte dans la présente modélisation dans la mesure où le but recherché est d'évaluer le comportement de la partie de la lumière qui justement n'a pas interagi avec ces extracteurs.

La modélisation du guide de lumière 1 décrite ci-dessus conduit aux résultats suivants :

- couplage de la lumière dans le guide de lumière 1 supérieur à 70% de la puissance lumineuse initialement fournie par la diode électroluminescente 4 ;

- jusqu'à 76% de la lumière qui traverse la zone d'extraction 8 sans être extraite du guide de lumière 1 est récupérée au niveau de la zone d'injection 2 et est réutilisée.

La modélisation ci-dessus a également permis de constater que le flux lumineux à l'intérieur du guide de lumière 1 présentait un bon parallélisme avec des directions de propagation comprises dans un angle maximal de 20°. En effet, comme cela est visible à la figure 1, la zone d'injection 2 est de forme parabolique, la source lumineuse 4 étant placée en regard du sommet 18 de la parabole. Cette configuration est telle qu'une majorité (environ 80%) de la lumière injectée par la source lumineuse 4 dans le guide 1 subit une réflexion totale à l'intérieur du guide 1 et ne peut s'échapper de celui-ci.. Par conséquent, la réflexion de la lumière est totale à l'interface entre le guide 1 et l'air ambiant. Il n'est donc pas nécessaire de recourir à des artifices tels qu'une métallisation du pourtour du guide de lumière 1 pour s'assurer que la lumière ne s'échappe pas du guide 1. Par ailleurs, la forme parabolique de la zone d'injection 2 a pour effet de collimater les faisceaux de lumière émis par la source lumineuse 4 selon des directions de propagation parallèles à l'axe de symétrie de la parabole qui se confond avec la direction d'injection X-X de la lumière dans le guide 1.

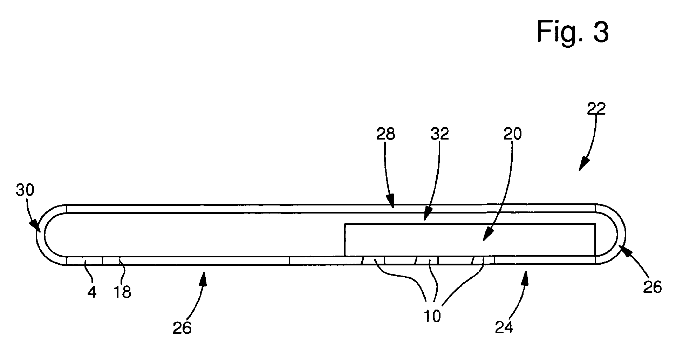

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées à la présente demande de brevet. En particulier, la figure 3 est une vue d'une variante de réalisation du guide de lumière 1 selon l'invention. Dans le cas de la figure 3, on a affaire à un dispositif d'affichage d'informations 20 de type transmissif. Comme on peut le constater à l'examen du dessin, le guide de lumière 22 présente la même géométrie que le guide de lumière 1 illustré à la figure 2. Néanmoins, dans ce cas, la zone 24 d'extraction de la lumière, disposée dans le prolongement de la zone 26 d'injection de lumière, est située sous la surface du dispositif d'affichage 20, de manière à éclairer celui-ci par l'arrière. La zone d'extraction 24 est ensuite prolongée par une première portion de transmission semi-cylindrique 26 elle-même prolongée par une deuxième portion de transmission plane 28 qui se referme sur la zone 26 d'injection de lumière via une troisième portion de transmission semi-cylindrique 30. Les première, deuxième et troisième portions de transmission 26, 28 et 30 servent uniquement à ramener la lumière qui n'a pas été utilisée au niveau de la zone d'extraction 24 jusqu'à la zone d'injection 26 afin que celle-ci puisse être réinjectée dans le guide 22. On comprendra que la surface d'affichage 32 du dispositif d'affichage d'informations 20 est orientée vers le haut, en regard de la portion de transmission plane 28.

**Revendications**

1. Système d'éclairage d'un dispositif d'affichage d'informations (12; 20), ce système d'éclairage comprenant un guide de lumière (1; 22) comportant une zone (2; 26) dans laquelle est injectée la lumière produite par au moins une source lumineuse (4), le guide de lumière comportant par ailleurs une zone d'extraction (8; 24) de la lumière se propageant à l'intérieur du guide (1; 22) pour éclairer le dispositif d'affichage (12; 20), cette zone d'extraction (8; 24) qui vient dans le prolongement de la zone d'injection étant pourvue d'extracteurs de lumière (10), le guide de lumière (1 ; 22) se présentant sous la forme d'une boucle qui se referme sur elle-même au niveau de la zone d'injection (2; 26) de la lumière pour permettre à la lumière provenant de la source lumineuse (4) et qui n'est pas extraite du guide de lumière (1; 22) au niveau de la zone d'extraction (8; 24) de poursuivre son chemin à l'intérieur du guide de lumière (1; 22) et de revenir à son point de départ au niveau de la zone d'injection de la lumière (2; 26), **caractérisé en ce que** le guide de lumière (1; 22) est dimensionné pour que le dispositif d'affichage d'informations (12; 20) puisse-t-être disposé à l'intérieur de la boucle et **en ce que** les extracteurs de lumière (10) sont arrangés de manière:

(a) à diriger la lumière extraite vers la face (14) d'affichage des informations du dispositif d'affichage d'informations (12) lorsque celui-ci est de type réflectif et sa face (14) d'affichage des informations est tournée du côté de la zone d'extraction (8), ou bien

(b) à diriger la lumière extraite vers la face arrière du dispositif d'affichage d'informations (20) opposée à sa surface d'affichage des informations (32) lorsque celui-ci est de type transmissif et sa surface arrière est tournée du côté de la zone d'extraction (24).

2. Système d'éclairage selon la revendication 1, **caractérisé en ce que** la zone d'injection de la lumière (2) est prolongée, via une première zone de transmission semi-cylindrique (6), par la zone d'extraction de la lumière (8), cette zone d'extraction de la lumière (8) étant elle-même prolongée par une seconde zone de transmission semi-cylindrique (16) qui se raccorde à la zone d'injection de la lumière (2), le dispositif d'affichage d'informations (1) étant du type réflectif avec sa face (14) d'affichage des informations tournée du côté de la zone d'extraction de la lumière (8) du guide de lumière (1).

3. Système d'éclairage selon la revendication 1, **caractérisé en ce que** la zone d'extraction de la lumière (24), disposée dans le prolongement de la zone d'injection de lumière (26), est prolongée par une première portion de transmission semi-cylindrique (26) elle-même prolongée par une deuxième portion de transmission plane (28) qui se referme sur la zone d'injection de lumière (26) via une troisième portion de transmission semi-cylindrique (30), les première, deuxième et troisième portions de transmission (26, 28, 30) servant uniquement à ramener la lumière qui n'a pas été utilisée au niveau de la zone d'extraction (24) jusqu'à la zone d'injection (26) afin que celle-ci puisse être réinjectée dans le guide (22), le dispositif d'affichage d'informations (20) étant de type transmissif avec sa surface d'affichage des informations (32) tournée du côté de la portion de transmission plane (28).

4. Système d'éclairage selon l'une quelconque des revendications 2 ou 3, **caractérisé en ce que** la seconde portion de transmission semi-cylindrique (16) et la troisième portion de transmission semi-cylindrique (30) se raccordent à la zone (2) d'injection de la lumière via deux sections de raccordement (A, B) de forme sensiblement triangulaire.

5. Système d'éclairage selon l'une quelconque des revendications 1 à 4, **caractérisé en ce que** la zone d'injection de la lumière (2; 26) présente un profil de forme parabolique.

**Claims**

1. Lighting system for a data display device (12, 20), wherein said lighting system includes a light guide (1; 22) including an area (2; 26) into which the light produced by at least one light source (4) is injected, the light guide further comprising an area (8; 24) for extracting the light propagating inside the guide (1; 22) to light the display device (12; 20), said extraction area (8; 24) coming in the extension of the injection area being provided with light extractors (10), wherein the light guide (1; 22) takes the form of a loop closed on itself at the light injection area (2; 26) to allow the light originating from the light source (4) and which was not extracted from the light guide (1; 22) in the extraction area (8; 24) to continue to travel inside the light guide (1; 22) and to return to the starting point thereof at the light injection area (2; 26), **characterized in that** the light guide (1; 22) is dimensioned so that data display device (12; 20) can be arranged inside the loop, and **in that** the light extractors (10) are arranged so as:

    (a) to direct the extracted light towards the data display surface (14) of the data display device (12) when the latter is of the reflective type and its data display surface (14) is turned towards the extraction zone (8), or
    (b) to direct the extracted light towards the rear surface of the data display device (20) opposed to its data display surface (32) when the latter is of the transmissive type and its rear surface is turned towards the extraction zone (24).

2. Lighting system according to claim 1, **characterized in that** the light injection area (2) is extended, via a first semi-cylindrical transmission area (6), by the light extraction area (8), wherein said light extraction area (8) is extended in turn by a second semi-cylindrical transmission area (16), which is connected to the light injection area (2), the data display device (1) is of the reflective type with the data display surface (14) oriented towards the light extraction area (8) of the light guide (1).

3. Lighting system according to claim 1, **characterized in that** the light extraction area (24), arranged in the extension of the light injection area (26), is extended by a first semi-cylindrical transmission portion (26), which is in turn extended by a second flat transmission portion (28), which is closed on the light injection area (26) via a third semi-cylindrical transmission portion (30), the first, second and third transmission portions (26, 28, 30) being used solely for returning the light that has not been used in the extraction area (24) to the injection area (26) for re-injection into the guide (22), and the data display device (20) being of the transmissive type with the data display surface (32) thereof oriented towards the flat transmission portion (28).

4. Lighting system according to any of claims 2 or 3, **characterized in that** the second semi-cylindrical transmission portion (16) and the third semi-cylindrical transmission portion (30) are connected to the light injection area (2) by two, substantially triangular connector sections (A, B).

5. Lighting system according to any of claims 1 to 4, **characterized in that** the light injection area (2; 26) has a parabolic profile.

**Patentansprüche**

1. Beleuchtungssystem einer Informationsanzeigevorrichtung (12; 20), wobei das Beleuchtungssystem einen Lichtleiter (1; 22) mit einem Bereich (2; 26) aufweist, in welchen das von zumindest einer Lichtquelle (4) erzeugte Licht eingekoppelt wird, wobei der Lichtleiter anderweitig einen Auskopplungsbereich (8; 24) für das Licht aufweist, der sich im Inneren des Leiters (1; 22) erstreckt, um die Anzeigevorrichtung (12; 20) zu beleuchten, wobei der Auskopplungsbereich (8; 24), welcher sich in Verlängerung des Einkopplungsbereichs erstreckt, mit Lichtauskopplern (10) versehen ist, wobei der Lichtleiter (1; 22) die Form eines Rings darstellt, welcher sich auf dem Niveau des Einkopplungsbereichs (2; 26) des Lichts selbst schließt, um es dem von der Lichtquelle (4) kommenden und nicht vom Lichtleiter (1; 22) auf dem Niveau des Auskopplungsbereichs (8; 24) extrahierten Licht zu ermöglichen, seinen Weg im Inneren des Lichtleiters (1; 22) fortzusetzen und an seinen Ausgangspunkt auf dem Niveau des Einkopplungsbereichs des Lichts (2; 26) zurückzukehren, **dadurch gekennzeichnet, dass** der Lichtleiter (1; 22) derart dimensioniert ist, dass die Informationsanzeigevorrichtung (12; 20) im Inneren des Rings angeordnet werden kann, und dass die Lichtauskoppler (10) derart angeordnet sind:

    (a) um das ausgekoppelte Licht gegen die Informationsanzeigefläche (14) der Informationsanzeigevorrichtung (12) zu richten, wenn diese reflektierend ist und die Informationsanzeigefläche (14) auf den Auskopplungsbereich (8) gerichtet ist, oder

(b) um das extrahierte Licht gegen die Rückseite der Informationsanzeigevorrichtung (20) zu richten, die der Informationsanzeigefläche (32) abgewandt ist, wenn diese transmissiv ist und mit ihre Rückseite zum Auskopplungsbereich (24) gerichtet ist.

2. Beleuchtungssystem nach Anspruch 1, **dadurch gekennzeichnet, dass** der Einkopplungsbereich des Lichts (2) über einen ersten halbzylindrischen Transmissionsbereich (6) über den Auskopplungsbereich des Lichts (8) verlängert ist, wobei der Auskopplungsbereich des Lichts (8) selbst über einen zweiten halbzylindrischen Transmissionsbereich (16) verlängert ist, der sich an den Einkopplungsbereich des Lichts (2) anschließt, wobei die Informationsanzeigevorrichtung (1) reflektierend und mit ihrer Informationsanzeigefläche (14) zum Auskopplungsbereich des Lichts (8) des Lichtleiters (1) ausgerichtet ist.

3. Beleuchtungssystem nach Anspruch 1, **dadurch gekennzeichnet, dass** der in Verlängerung des Einkopplungsbereichs des Lichts (26) angeordnete Auskopplungsbereich des Lichts (24) über einen ersten halbzylindrischen Transmissionsabschnitt (26) verlängert ist, der selbst über einen zweiten planaren Transmissionsabschnitt (28) verlängert ist, der sich wieder mit dem Einkopplungsbereich des Lichts (26) über einen dritten halbzylindrischen Transmissionsbereich (30) schließt, wobei der erste, zweite und dritte Transmissionsabschnitt (26, 28, 30) einzig und allein dazu dienen, das Licht zurückzuführen, welches auf dem Niveau des Auskopplungsbereichs (24) bis zum Einkopplungsbereich (26) nicht verwendet wurde, um es wieder in den Leiter (22) einkoppeln zu können, wobei die Informationsanzeigevorrichtung (20) transmissiv ausgebildet und ihre Informationsanzeigefläche (32) zum ebenen Transmissionsabschnitt (28) ausgerichtet ist.

4. Beleuchtungssystem nach einem beliebigen der Ansprüche 2 oder 3, **dadurch gekennzeichnet, dass** sich der zweite halbzylindrische Transmissionsabschnitt (16) und der dritte halbzylindrische Transmissionsabschnitt (30) über zwei im Wesentlichen dreieckige Anschlussbereiche an den Einkopplungsbereich (2) des Lichts anschließen.

5. Beleuchtungssystem nach einem beliebigen der Ansprüche 1 bis 4, **dadurch gekennzeichnet, dass** der Einkopplungsbereich des Lichts (2; 26) ein parabolisches Profil darstellt.

Fig. 1

Fig. 2

Fig. 3

**EP 2 392 952 B1**

**RÉFÉRENCES CITÉES DANS LA DESCRIPTION**

**Documents brevets cités dans la description**

- GB 2324599 A